# EUROPEAN PATENT APPLICATION

(11) **EP 3 822 879 A1**
(43) Date of publication of application: **19.05.2021**
(21) Application number: 19209779.8
(22) Date of filing: 18.11.2019
(51) Int. Cl.: G06Q 10/04

(54) **METHOD, APPARATUS AND SYSTEM FOR LOGISTICS MANAGEMENT USING GUIDED VEHICLES**

(71) Applicant: Siemens Aktiengesellschaft, 80333 München (DE)
(72) Inventor: KHOUND, Arnab, 781037 Guwahat, Assam (IN); PILLAI, Sajan, Alappuzha, Kerala (IN)
(74) Representative: Isarpatent

(57) **Abstract**

A method (400), apparatus (101) and system (100) of logistics management in a geographical area are provided. In one aspect, the method (400) includes obtaining one or more parameters associated with at least one station (110A-N) within the geographical area, wherein the at least one station (110A-N) is configured to manage one or more materials. The method (400) also includes computing real-time performance of the at least one station (110A-N) based on the one or more parameters associated with the at least one station (110A-N). Additionally, the method (400) includes generating a schedule for one or more guided vehicles (114A-N) based on the real-time performance of the at least one station (110A-N), wherein the one or more guided vehicles (114A-N) are configured to manage logistics of the one or more materials at the at least one station (110A-N) as per the schedule.

## Description

The present invention relates to a method, apparatus and system for logistics management using guided vehicles.

Transportation of materials from one location to another is of significance in different applications such as manufacturing facilities, assembly factories, commercial businesses, etc. Such transportation of materials may be achieved with the help of guided vehicles. The efficiency of such factories and assembly lines is closely dependent on the performance of associated individual stations. Each station may be responsible for a part of an entire production line which generates a final product or output. Additionally, timely onloading and offloading of one or more materials associated with each station is of utmost importance to maintain efficient functioning of the manufacturing facilities. A delay at a station can occur if one or more materials do not reach the stations on time. This may affect the downstream processing of the one or more materials thereby delaying the entire process. Moreover, there are chances of the guided vehicles entering a waiting period if a designated station is performing below optimal levels. Similarly, the efficiency of the stations may also be affected if one or more materials do not leave the stations to respective destinations on time. Such delay may cause congestion in the stations due to accumulation of the one or more materials. Therefore, the stations can remain idle due to absence of one or more materials for further processing.

Currently, the guided vehicles that form a part of the logistics operation follow a fixed schedule for transportation of materials from one station to another. Additionally, manual effort may be required to trigger a guided vehicle to the designated station for management of the materials. Since the time taken for processing of materials at the stations may differ based on the performance of the respective stations, following a fixed schedule for logistics leads to over-utilization or under-utilization of resources, thereby causing delays or bottlenecks in the workflow. This affects the throughput of the production lines.

Therefore, there is a need for a method and system that effectively manages the performance of the stations associated with the production line.

The object of the invention is therefore to provide a method and a system for logistics management in a geographical area that is capable of managing logistics associated with one or more stations thereby increasing the accuracy and efficiency of the output of the production line.

The object of the invention is solved by a method of logistics management as claimed in claim 1, an apparatus as claimed in claim 10 and system as claimed in claim 11, a computer program product as claimed in claim 14 and a computer readable medium as claimed in claim 15 which manages logistics in a geographical area using guided vehicles.

In the following, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

Based on the abovementioned method, the invention achieves the object by generating a schedule for one or more guided vehicles based on the real-time performance of the station. An advantage of the invention is that dynamic generation of schedule for the one or more guided vehicles enables effective management of logistics between one or more stations and/or between stations and assigned destinations. Yet another advantage of the invention is that the real-time performance of the station is improved and efficiently managed. Therefore, delay in transportation of materials from one location to another is avoided.

The present invention describes a method of logistics management in a geographical area using guided vehicles. Logistics management may include transportation of one or more materials from an onloading location to an offloading or target destination. Such onloading location may be any location where one or more materials to be transported may be located or stored. Offloading location or target location may be any location where the one or more materials is to be transported or offloaded. The onloading and offloading/target locations may include one or more stations, for example, a warehouse which includes a plurality of materials, residential or commercial settlements, factory outlets, transportation hubs, logistics hubs, ports, etc. The guided vehicles involved in the logistics management may be manually guided vehicles or automated guided vehicles. Manually guided vehicles may include manual transportation systems, for example, trucks, forklifts, trolleys, or any other transportation system which may require manual operation. Automated guided vehicles may include vehicular means which are operated using a computing device. Such automated guided vehicles include carriers or mobile robots which move along defined markers on a floor using one or more sensors. Therefore, automated guided vehicles may not need an onboard operator or driver. Alternatively, guided vehicles may also include IoT devices, robots, aerial autonomous vehicles, etc. The guided vehicles may be communicatively coupled to each other and also to the at least one station. The geographical area may include one or more stations communicatively coupled with each other. Such one or more stations may form a part of a production line or an organizational network configured to manage one or more materials.

According to an embodiment, the method includes a step of obtaining one or more parameters associated with at least one station within the geographical area. The one or more parameters may be associated with the functioning or management of the at least one station. Such one or more parameters may include, but not be limited to, location of the station, real-time processing time associated with the at least one station, optimal processing time of the at least one station, data associated with one or more materials required by the at least one station, and data associated with the one or more guided vehicles in proximity to the at least one station. The method further includes computing real-time performance of the at least one station based on the one or more parameters associated with the at least one station. Such real-time performance associated with the at least one station enables identification of functional capacity of the at least one station. In an embodiment, the real-time performance of the at least one station may be determined based on the processing time of the station in managing the one or more materials. The method further includes generating a schedule for the one or more guided vehicles based on the real-time performance of the at least one station. The one or more guided vehicles may be configured to manage logistics of the one or more materials at the station based on the schedule. A schedule may be a plan or scheme for management of logistics of the one or more materials at a designated station. The schedule may include details such as, but not limited to, one or more allocated stations for the one or more guided vehicles, expected time of entry at the designated station, expected time of departure from the designated station, etc. The schedule enables the one or more guided vehicles to operate effectively and in a timely manner. The real-time performance of the at least one station affects the management of the one or more guided vehicles. Therefore, the movement of the guided vehicles may be accelerated or moderated based on the potential of the at least one station. Advantageously, the one or more guided vehicles may be efficiently managed based on the generated schedule such that the performance of the at least one station is enhanced. Therefore, the chances of delay and/or congestion of production line in the at least one station is avoided.

According to an embodiment, the method further includes identifying one or more guided vehicles based on real-time position information of the one or more guided vehicles. The one or more guided vehicles may be equipped with Real-Time Locating System (RTLS) technology using which the geolocation of the one or more guided vehicles may be identified. Therefore, accurate position/location of the one or more guided vehicles can be determined. The method further includes selecting at least one guided vehicle from the one or more guided vehicles based on the real-time performance of the station. The real-time performance of the at least one station provides information related to functional efficiency of the at least one station. Therefore, based on the functional efficiency, the one or more guided vehicles can be scheduled to reach the at least one station. For example, if the real-time performance of the at least one station is low, the one or more guided vehicles may be selected such that the one or more guided vehicles reach the at least one station later than expected or proposed. Therefore, the one or more guided vehicles farthest from the at least one station may be chosen such that the time taken for the one or more guided vehicle to reach the at least one station is moderated. In another embodiment, the one or more guided vehicles may be selected based on the dependency of the at least one station on the one or more materials. Therefore, if one or more guided vehicles carrying the one or more materials which may be needed by the at least one station sooner than expected, such one or more guided vehicles may be selected. The selection of the one or more guided vehicles may also be based one or more parameters associated with the at least one guided vehicle. The one or more parameters may include, for example, type of the vehicle, status of the vehicle, location of the vehicle, availability of the vehicle, etc. The type of the vehicle may include manually operated vehicles or automated guided vehicles. Further classification on the type of vehicle may also be performed to identify the most suitable guided vehicle for the at least one station. The status of the vehicle may include the operating, technical and/or working conditions of the vehicle. The availability of the vehicle may be based on allocation details of the one or more guided vehicles to at least one station. Advantageously, the one or more vehicles may be chosen such that necessary requirements of the at least one station are met. Therefore, downstream processing of the one or more materials is improved.

According to a further embodiment, the method includes sending the generated schedule to the at least one selected guided vehicle. The generated schedule may be sent to the at least one selected guided vehicle through a cloud platform. Advantageously, the need for manually scheduling logistics at the least one station is eliminated. Yet another advantage of the invention is that the logistics management is faster and dynamic thereby enabling effective selection of the one or more guided vehicles for the at least one station.

According to another embodiment, the method further includes operating the at least one guided vehicle based on the generated schedule such that the performance of the at least one station becomes optimal. The one or more guided vehicles are operated based on the generated schedule such that the requirements of the at least one station are met. Such requirements may be, for example, timely transportation of one or more materials from and to the at least one station. Advantageously, the efficient movement of the one or more materials to and from the at least one station enables efficient functioning of the at least one station. Therefore, the performance of the at least one station is optimized.

According to an embodiment, generating the schedule includes determining whether the real-time performance of the at least one station is below a pre-defined threshold level. The pre-defined threshold level may be an optimal processing time associated with the at least one station. The optimal processing time may be the time required for processing one or more materials by the at least one station at optimum conditions. In an embodiment, the optimal processing time may be the minimum time required to process the one or materials by the at least one station. The real-time performance of the at least one station may be equal to the threshold level, above the threshold level or below the threshold level. If the real-time performance of the at least one station is below the pre-defined threshold level, a standard schedule associated with the one or more guided vehicles is modified. The standard schedule may include logistics related information for the one or more guided vehicles based on the optimal processing time associated with the at least one station. For example, the real-time performance of the at least one station may be lower than an expected performance due to absence of the one or more materials required for the production line at the at least one station. Therefore, the standard schedule associated with the one or more guided vehicles may be modified such that the one or more guided vehicles designated to carry such one or more materials to the at least one station can reach the at least one station faster. In another embodiment, the low performance may also be due to accumulation of one or more materials at the end of the production line resulting from a delay in onloading of such one or materials by the one or more guided vehicles. In such a case, the standard schedule can be modified such that the one or more guided vehicles can reach the at least one station faster so as to transport the one or more materials from the at least one station to another station or a target location. In yet another embodiment, the performance of the at least one station may be low due to a fault in the at least one station. Therefore, the standard schedule of the one or more guided vehicles may be modified such that the one or more guided vehicles may reach the at least one station later than initially planned. This also enables the one or more guided vehicles to be available for other tasks.

According to an embodiment, if the real-time performance of the at least one station is not below the pre-defined threshold level, a determination is made if the real-time performance of the at least one station is above a pre-defined threshold level. If the real-time processing time associated with the at least one station is lesser than the optimal processing time associated with the at least one station, the real-time performance of the at least one station may be said to be higher than the pre-defined threshold. Therefore, the standard schedule for the one or more guided vehicles may be modified such that the real-time performance of the at least one station is optimized. The modifications to the standard schedule of the one or more guided vehicles may include, for example, improving the availability of the one or more guided vehicles around the at least one station, and/or expediting the transport of the one or more materials from the at least one station to another station or to a target location. Advantageously, modification of the standard schedule enables efficient functioning of the at least one station.

According to another embodiment, if the real-time performance of the at least one station is not above the pre-defined threshold level, a determination is made if the real-time performance of the at least one station is equal to the pre-defined threshold level. If the real-time processing time associated with the at least one station is as per the optimum processing time, the real-time performance of the at least one station may be said to be equal to the pre-defined threshold level. If the real-time performance of the at least one station is equal to the pre-defined threshold level, the standard schedule from a schedule database is obtained. The one or more guided vehicles are operated on the standard schedule such that the optimum performance of the at least one station is maintained. Advantageously, the standard schedule for the one or more guided vehicles may be dynamically modified so as to optimize the real-time performance of the at least one station. Therefore, manual intervention for management of logistics is eliminated thus improving the accuracy of the process of logistics management.

According to an embodiment, in computing the real-time performance of the at least one station, the method includes computing a real-time processing time associated with the at least one station. The real-time processing time may be computed based on a time taken by the at least one station to complete processing the one or more materials in the production line. In an embodiment, the production line at the at least one station may include one or more steps to be performed. The real-time processing time of the at least one station may be a cumulative time taken for completion of each of the one or more steps at the production line. The real-time processing time of the at least one station may also be computed based on an entry and exit time of the one or more guided vehicles to and from the at least one station. The at least one station may include a geofence which records the entry and exit times of the one or more guided vehicles. The method further includes computing the real-time performance of the at least one station based on the real-time processing time and the optimal processing time associated with the at least one station. The optimal processing time may be the minimum amount of time required to complete processing the one or more materials in the production line of the at least one station, when conditions associated with such processing are optimal. Such conditions may include, for example, technical functioning of the at least one station, availability of resources at the at least one station, availability and functioning of the one or more guided vehicles designated to the at least one station, etc. The real-time performance of the at least one station may be computed by obtaining a difference between the real-time processing time of the at least one station and the optimal processing time associated with the at least one station. Advantageously, computing the real-time performance of the at least one station enables effective management of logistics for the at least one station.

According to another embodiment, modifying the standard schedule if the performance of the at least one station is below the pre-defined threshold levels includes modifying the schedule of the one or more guided vehicles such that delivery of the one or more materials to the at least one station is moderated. In the embodiment, the at least one station may not be capable of processing additional one or materials due to slow processing of existing batch of one or more materials. Therefore, delivery of such additional one or more materials may be moderated such that the one or more materials reach the at least one station later than initially planned. In another embodiment, the schedule may be modified such that at least one second station is identified for the delivery of the one or more materials. Such at least one second station may be capable of handling the one or more materials. For example, the at least one second station may be a station which has a real-time performance level higher than the pre-defined threshold levels. Therefore, the one or more materials may be processed by such at least one second station thereby avoiding delay in processing of the one or more materials. In yet another embodiment, the schedule of the one or more guided vehicles such that delivery of the one or more materials from the at least one station is accelerated to the at least one second station. For example, if the at least one station is performing below pre-defined threshold levels, the processing time taken for the one or more materials is higher. Therefore, once such one or more materials are processed, the transportation of such one or more materials from the at least one station to the destined at least one second station or a target location maybe accelerated. Therefore, advantageously, the efficiency of the at least one station may be improved by effective management of logistics.

According to another embodiment, if the real-time performance of the at least one station is above the pre-defined threshold level, the schedule of the one or more guided vehicles may be modified such that the delivery of the one or more materials to the at least one station is accelerated. For example, if the real-time performance of the at least station is high, the real-time processing time associated with the at least one station may be less. Therefore, the at least one station may be capable of processing more materials in a given amount of time in comparison to other stations. Thus, transportation of the one or more materials to such at least one station may be accelerated for faster downstream processing of the one or more materials. Therefore, the standard schedule of the one or more guided vehicles may be modified such that at least one of the one or more guided vehicles carrying the one or more materials reach the at least one station faster.

In another embodiment, the at least one station with higher real-time performance may be labelled as a potential station that can receive the one or more materials from other stations. For example, if one or more stations are unable to process the one or more materials due to low real-time performance, such one or more materials may be transported to the at least one station with high real-time performance. This enables faster processing of the one or more materials thereby improving the efficiency of the stations. Therefore, labelling of such at least one station as a potential station enables faster identification of resources thereby allowing dynamic management of logistics between one or more stations.

In yet another embodiment, the schedule for the one or more guided vehicles may be modified such that the delivery of the one or more materials from the at least one station to the at least one second station may be accelerated. For example, higher real-time performance of the at least one station may lead to accumulation of the one or more materials at the end of the production line. This may affect the overall performance of the at least one station and also cause delay in further processing of the one or more materials. Therefore, one or more guided vehicles may be scheduled such that a frequency of onloading the one or more materials from the at least one station is increased. This enables faster downstream processing of the one or more materials. Thus, the transportation of the one or more materials is effectively managed.

According to an embodiment, the one or more parameters associated with the at least one station may be received via a real-time locating system. Such one or more parameters may be real-time processing time of the at least one station. The real-time processing time of the at least one station may be determined using one or more sensors disposed in the at least one station. Additionally, the geofences at the least one station may monitor the presence of one or more guided vehicles in a pre-defined perimeter surrounding the at least one station. Therefore, the entry and exit time of the one or more guided vehicles may enable identifying the real-time processing time associated with the at least one station.

The invention relates in one aspect to an apparatus for logistics management using guided vehicles. The apparatus includes one or more processing units and a memory communicatively coupled to the one or more processing units. The memory includes a logistics management module that may be configured to perform the method steps of managing logistics in a geographical area.

According to an embodiment, the logistics management module is configured to obtain one or more parameters associated with at least one station within the geographical area. The one or more parameters may be associated with the functioning or management of the at least one station. Such one or more parameters may include, but not be limited to, location of the station, real-time processing time associated with the at least one station, optimal processing time of the at least one station, data associated with one or more materials required by the at least one station, and data associated with the one or more guided vehicles in proximity to the at least one station. The logistics management module is configured to compute real-time performance of the at least one station based on the one or more parameters associated with the at least one station. Such real-time performance associated with the at least one station enables identification of functional capacity of the at least one station. In an embodiment, the real-time performance of the at least one station may be determined based on the processing time of the station in managing the one or more materials. The logistics management module is configured to generate a schedule for the one or more guided vehicles based on the real-time performance of the at least one station. The one or more guided vehicles may be configured to manage logistics of the one or more materials at the station based on the schedule. A schedule may be a plan or scheme for management of logistics of the one or more materials at a designated station. The schedule may include details such as, but not limited to, one or more allocated stations for the one or more guided vehicles, expected time of entry at the designated station, expected time of departure from the designated station, etc. The schedule enables the one or more guided vehicles to operate effectively and in a timely manner. The real-time performance of the at least one station affects the management of the one or more guided vehicles. Therefore, the movement of the guided vehicles may be accelerated or moderated based on the potential of the at least one station. Advantageously, the one or more guided vehicles may be efficiently managed based on the generated schedule such that the performance of the at least one station is enhanced. Therefore, the chances of delay and/or congestion of production line in the at least one station is avoided.

According to an embodiment, the logistics management module is further configured to identify one or more guided vehicles based on real-time position information of the one or more guided vehicles. The one or more guided vehicles may be equipped with Real-Time Locating System (RTLS) technology using which the geolocation of the one or more guided vehicles may be identified. Therefore, accurate position/location of the one or more guided vehicles can be determined. The logistics management module is further configured to select at least one guided vehicle from the one or more guided vehicles based on the real-time performance of the station. The real-time performance of the at least one station provides information related to functional efficiency of the at least one station. Therefore, based on the functional efficiency, the one or more guided vehicles can be scheduled to reach the at least one station. For example, if the real-time performance of the at least one station is low, the one or more guided vehicles may be selected such that the one or more guided vehicles reach the at least one station later than expected or proposed. Therefore, the one or more guided vehicles farthest from the at least one station may be chosen such that the time taken for the one or more guided vehicle to reach the at least one station is moderated. In another embodiment, the one or more guided vehicles may be selected based on the dependency of the at least one station on the one or more materials. Therefore, if one or more guided vehicles carrying the one or more materials which may be needed by the at least one station sooner than expected, such one or more guided vehicles may be selected. The selection of the one or more guided vehicles may also be based on one or more parameters associated with the at least one guided vehicle. The one or more parameters may include, for example, type of the vehicle, status of the vehicle, location of the vehicle, availability of the vehicle, etc. The type of the vehicle may include manually operated vehicles or automated guided vehicles. Further classification on the type of vehicle may also be performed to identify the most suitable guided vehicle for the at least one station. The status of the vehicle may include the operating, technical and/or working conditions of the vehicle. The availability of the vehicle may be based on allocation details of the one or more guided vehicles to at least one station. Advantageously, the one or more vehicles may be chosen such that necessary requirements of the at least one station are met. Therefore, downstream processing of the one or more materials is improved.

According to a further embodiment, the logistics management module is configured to send the generated schedule to the at least one selected guided vehicle. The generated schedule may be sent to the at least one selected guided vehicle through a cloud platform. Advantageously, the need for manually scheduling logistics at the least one station is eliminated. Yet another advantage of the invention is that the logistics management is faster and dynamic thereby enabling effective selection of the one or more guided vehicles for the at least one station.

According to another embodiment, the logistics management module is further configured to operate the at least one guided vehicle based on the generated schedule such that the performance of the at least one station becomes optimal. The one or more guided vehicles are operated based on the generated schedule such that the requirements of the at least one station are met. Such requirements may be, for example, timely transportation of one or more materials from and to the at least one station. Advantageously, the efficient movement of the one or more materials to and from the at least one station enables efficient functioning of the at least one station. Therefore, the performance of the at least one station is optimized.

According to an embodiment, in generating the schedule, logistics management module is configured to determine whether the real-time performance of the at least one station is below a pre-defined threshold level. The pre-defined threshold level may be an optimal processing time associated with the at least one station. The optimal processing time may be the time required for processing one or more materials by the at least one station at optimum conditions. In an embodiment, the optimal processing time may be the minimum time required to process the one or materials by the at least one station. The real-time performance of the at least one station may be equal to the threshold level, above the threshold level or below the threshold level. If the real-time performance of the at least one station is below the pre-defined threshold level, a standard schedule associated with the one or more guided vehicles is modified. The standard schedule may include logistics related information for the one or more guided vehicles based on the optimal processing time associated with the at least one station. For example, the real-time performance of the at least one station may be lower than an expected performance due to absence of the one or more materials required for the production line at the at least one station. Therefore, the standard schedule associated with the one or more guided vehicles may be modified such that the one or more guided vehicles designated to carry such one or more materials to the at least one station can reach the at least one station faster. In another embodiment, the low performance may also be due to accumulation of one or more materials at the end of the production line resulting from a delay in pick-up of such one or materials by the one or more guided vehicles. In such a case, the standard schedule can be modified such that the one or more guided vehicles can reach the at least one station faster so as to transport the one or more materials from the at least one station to another station or a target location. In yet another embodiment, the performance of the at least one station may be low due to a fault in the at least one station. Therefore, the standard schedule of the one or more guided vehicles may be modified such that the one or more guided vehicles may reach the at least one station later than initially planned. This also enables the one or more guided vehicles to be available for other tasks.

According to an embodiment, if the real-time performance of the at least one station is not below the pre-defined threshold level, logistics management module is configured to determine if the real-time performance of the at least one station is above a pre-defined threshold level. If the real-time processing time associated with the at least one station is lesser than the optimal processing time associated with the at least one station, the real-time performance of the at least one station may be said to be higher than the pre-defined threshold. Therefore, the standard schedule for the one or more guided vehicles may be modified such that the real-time performance of the at least one station is optimized. The modifications to the standard schedule of the one or more guided vehicles may include, for example, improving the availability of the one or more guided vehicles around the at least one station, and/or expediting the transport of the one or more materials from the at least one station to another station or to a target location. Advantageously, modification of the standard schedule enables efficient functioning of the at least one station.

According to another embodiment, if the real-time performance of the at least one station is not above the pre-defined threshold level, logistics management module is configured to determine if the real-time performance of the at least one station is equal to the pre-defined threshold level. If the real-time processing time associated with the at least one station is as per the optimum processing time, the real-time performance of the at least one station may be said to be equal to the pre-defined threshold level. If the real-time performance of the at least one station is equal to the pre-defined threshold level, the standard schedule from a schedule database is obtained. The one or more guided vehicles are operated on the standard schedule such that the optimum performance of the at least one station is maintained. Advantageously, the standard schedule for the one or more guided vehicles may be dynamically modified so as to optimize the real-time performance of the at least one station. Therefore, manual intervention for management of logistics is eliminated thus improving the accuracy of the process of logistics management.

According to an embodiment, in computing the real-time performance of the at least one station, the logistics management module is configured to compute a real-time processing time associated with the at least one station. The real-time processing time may be computed based on a time taken by the at least one station to complete processing the one or more materials in the production line. In an embodiment, the production line at the at least one station may include one or more steps to be performed. The real-time processing time of the at least one station may be a cumulative time taken for completion of each of the one or more steps at the production line. The real-time processing time of the at least one station may also be computed based on an entry and exit time of the one or more guided vehicles to and from the at least one station. The at least one station may include a geofence which records the entry and exit times of the one or more guided vehicles. The logistics management module is further configured to compute the real-time performance of the at least one station based on the real-time processing time and the optimal processing time associated with the at least one station. The optimal processing time may be the minimum amount of time required to complete processing the one or more materials in the production line of the at least one station, when conditions associated with such processing are optimal. Such conditions may include, for example, technical functioning of the at least one station, availability of resources at the at least one station, availability and functioning of the one or more guided vehicles designated to the at least one station, etc. The real-time performance of the at least one station may be computed by obtaining a difference between the real-time processing time of the at least one station and the optimal processing time associated with the at least one station. Advantageously, computing the real-time performance of the at least one station enables effective management of logistics for the at least one station.

According to another embodiment, in modifying the standard schedule if the performance of the at least one station is below the pre-defined threshold level, the logistics management module is configured to modify the schedule of the one or more guided vehicles such that delivery of the one or more materials to the at least one station is moderated. In the embodiment, the at least one station may not be capable of processing additional one or materials due to slow processing of existing batch of one or more materials. Therefore, delivery of such additional one or more materials may be moderated such that the one or more materials reach the at least one station later than initially planned. In another embodiment, the schedule may be modified such that at least one second station is identified for the delivery of the one or more materials. Such at least one second station may be capable of handling the one or more materials. For example, the at least one second station may be a station which has a real-time performance level higher than the pre-defined threshold levels. Therefore, the one or more materials may be processed by such at least one second station thereby avoiding delay in processing of the one or more materials. In yet another embodiment, the schedule of the one or more guided vehicles such that delivery of the one or more materials from the at least one station is accelerated to the at least one second station. For example, if the at least one station is performing below pre-defined threshold levels, the processing time taken for the one or more materials is higher. Therefore, once such one or more materials are processed, the transportation of such one or more materials from the at least one station to the destined at least one second station or a target location maybe accelerated. Therefore, advantageously, the efficiency of the at least one station may be improved by effective management of logistics.

According to another embodiment, if the real-time performance of the at least one station is above the pre-defined threshold level, the schedule of the one or more guided vehicles may be modified such that the delivery of the one or more materials to the at least one station is accelerated. For example, if the real-time performance of the at least one station is high, the real-time processing time associated with the at least one station may be less. Therefore, the at least one station may be capable of processing more materials in a given amount of time in comparison to other stations. Thus, transportation of the one or more materials to such at least one station may be accelerated for faster downstream processing of the one or more materials. Therefore, the standard schedule of the one or more guided vehicles may be modified such that at least one of the one or more guided vehicles carrying the one or more materials reach the at least one station faster.

In another embodiment, the at least one station with higher real-time performance may be labelled as a potential station that can receive the one or more materials from other stations. For example, if one or stations are unable to process the one or more materials due to low real-time performance, such one or more materials may be transported to the at least one station with high real-time performance. This enables faster processing of the one or more materials thereby improving the efficiency of the stations. Therefore, labelling of such at least one station as a potential station enables faster identification of resources thereby allowing dynamic management of logistics between one or more stations.

In yet another embodiment, the schedule for the one or more guided vehicles may be modified such that the delivery of the one or more materials from the at least one station to the at least one second station may be accelerated. For example, higher real-time performance of the at least one station may lead to accumulation of the one or more materials at the end of the production line. This may affect the overall performance of the at least one station and also cause delay in further processing of the one or more materials. Therefore, one or more guided vehicles may be scheduled such that frequency of onloading the one or more materials from the at least one station is increased. This enables faster downstream processing of the one or more materials. Thus, the transportation of the one or more materials is effectively managed.

According to an embodiment, the one or more parameters associated with the at least one station may be received via a real-time locating system. Such one or more parameters may be real-time processing time of the at least one station. The real-time processing time of the at least one station may be determined using one or more sensors disposed in the at least one station. Additionally, the geofences at the least one station may monitor the presence of one or more guided vehicles in a pre-defined perimeter surrounding the at least one station. Therefore, the entry and exit time of the one or more guided vehicles may enable identifying the real-time processing time associated with the at least one station.

The invention also relates to a system including an apparatus as claimed in claim 10, one or more guided vehicles communicatively coupled to the apparatus, and one or more stations disposed within a geographical area. The apparatus includes computer readable instructions, which when executed by the apparatus causes the apparatus to perform the method according to claims 1 to 9.

According to an embodiment, the one or more stations is configured with geofences. The geofence enables identification of time period of entry and/or exit of one or more guided vehicles within a pre-defined perimeter surrounding the at least one station.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: is a schematic representation of a logistics management system , according to a first embodiment.
- FIG 2: is a schematic representation of a logistics management system , according to a second embodiment.
- FIG 3: block diagram of an apparatus for logistics management as shown in FIG 1 and 2, according to an embodiment.
- FIG 4: illustrates a flowchart of a method of logistics management in a geographical area, according to an embodiment.
- FIG 5: illustrates a flowchart of a method of generating a schedule, according to an embodiment.
- FIG 6: illustrates a flowchart of a method of computing a real-time performance of the at least one station, according to an embodiment.
- FIG 7: illustrates a flowchart of a method of modifying a standard schedule if the real-time performance of the at least one station is below a pre-defined threshold, according to another embodiment.
- FIG 8: illustrates a flowchart of a method of modifying the standard schedule if the real-time performance of the at least one station is above a pre-defined threshold, according to an embodiment.
- FIG 9: illustrates a flowchart of a method of modifying the standard schedule if the real-time performance of the at least one station is above a pre-defined threshold, according to another embodiment.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

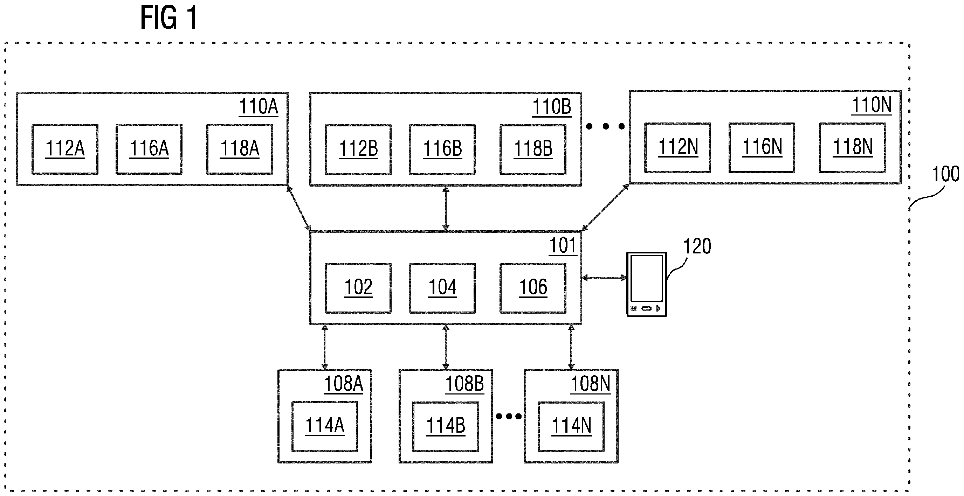

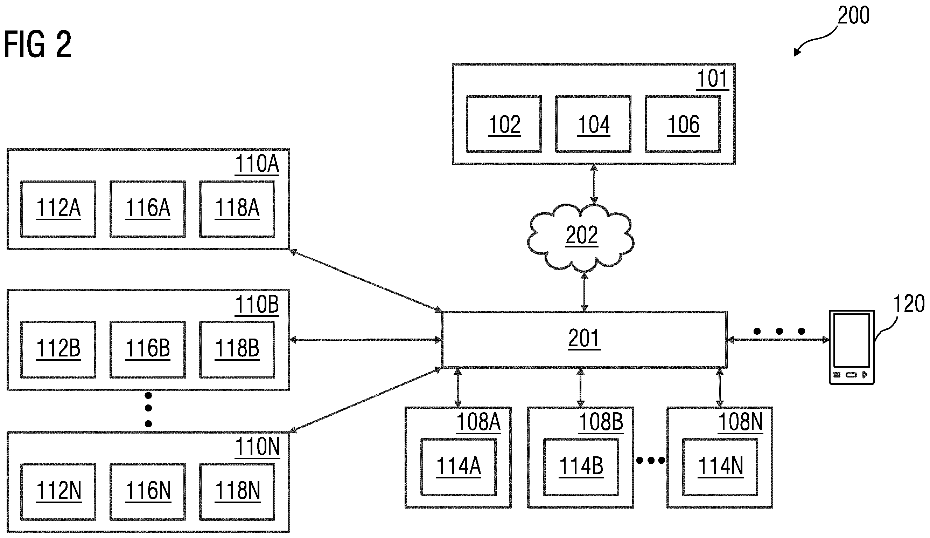

FIG 1 is a schematic representation of a system 100 for logistics management in a geographical area, according to a first embodiment. The geographical area may include, for example, a manufacturing facility, a logistics/transportation hub or any processing facility. The system includes one or more components such as one or more stations 110A-N disposed in close proximity. Such one or more stations 110A-N may be configured to perform one or more functions as a part of the manufacturing facility or logistics/transportation hub. The one or more stations 110A-N may be any onloading and/or offloading/target locations where one or more materials may be onloaded or offloaded/transported respectively. Such one or more stations 110A-N may include, for example, warehouses, residential or commercial settlements, factory outlets, ports, etc. The system 100 further includes an apparatus 101 configured to manage logistics in the geographical area. The system 100 also includes one or more guided vehicles 114A-N which are communicatively coupled to the apparatus 101 and to the one or more stations 110A-N. The guided vehicles 114A-N may include automated guided vehicles and manually guided vehicles operable on different modes of transportation such as railways, roadways, waterways and/or airways. The one or more guided vehicles 114A-N may be connected to the apparatus 101 and/or the one or more stations 110A-N via a wired or wireless network. Similarly, the apparatus 101 may be connected to the one or more stations 110A-N through a wired or a wireless network. The one or more stations 110A-N include a real-time locating system (RTLS) application 112A-N which is capable of determining and/or receiving a real-time location of one or more materials in at least one of the one or more stations 110A-N. The one or more stations 110A-N further include a time sensor 116A-N for determining a time taken for processing the one or more materials in the at least one of the one or more stations 110A-N. The one or more stations 110A-N additionally include a geofence module 118A-N capable of configuring a geofence around at least one of the one or more stations 110A-N. The geofence module 118A-N may also be capable of determining an entry and exit time of the one or more guided vehicles 114A-N to and from the at least one of the one or more stations 110A-N. The one or more guided vehicles 114A-N may include an interface 108A-N capable of receiving at least one schedule from the apparatus 101 for efficient management of logistics in the geographical area. The apparatus 101 includes a logistics management module 102 configured to manage logistics in the geographical area. The apparatus 101 further includes a schedule database 104 configured to store one or more schedules associated with the one or more guided vehicles 114A-N. The apparatus 101 may also include a network interface 106 for communicating with one or more components of the system 100. In the embodiment, the apparatus 101 is disposed in the geographical area such that the apparatus 101 is in proximity to the one or more stations 110A-N. In an alternate embodiment for the system 200 depicted in FIG 2, the apparatus 101 may be remotely located, for example, on a cloud platform and is connected to the one or more stations 110A-N and the one or more guided vehicles 114A-N through an IoT gateway 201. The IoT gateway 201 may be an edge device. The edge device 201 is connected to the apparatus 101 through a network 202. The one or more components of the system 100 may include one or more communication interfaces (not illustrated) for effective communication with the cloud platform 101. In a further embodiment, the apparatus 101 may be connected to one or more user devices 120. The user device 120 may be a handheld device or a computing unit configured to receive one or more details of logistics management in the geographical area. The user device 120 may also include a user interface through which a user may input details required for effective management of logistics in the geographical area. The remote location of the apparatus 101 enables management of logistics in a wider geographical area encompassing a plurality of manufacturing facilities, transportation hubs, warehouses, etc.

The one or more stations 110A-N and the guided vehicles 114AN may have an operating system and at least one software program for performing desired operations in the system 100. Also, the one or more stations 110A-N and the guided vehicles 114A-N may run software applications for collecting, and preprocessing data and transmitting the pre-processed data to the cloud platform 101.

The cloud platform 101 can be a cloud infrastructure capable of providing cloud-based services such as data storage services, data analytics services, data visualization services, etc. based on the plant data. The cloud platform 101 can be part of public cloud or a private cloud. The cloud platform 101 may enable data scientists/software vendors to provide software applications/firmware as a service, thereby eliminating a need for software maintenance, upgrading, and backup by the users. The software application can be full application, or software patch.

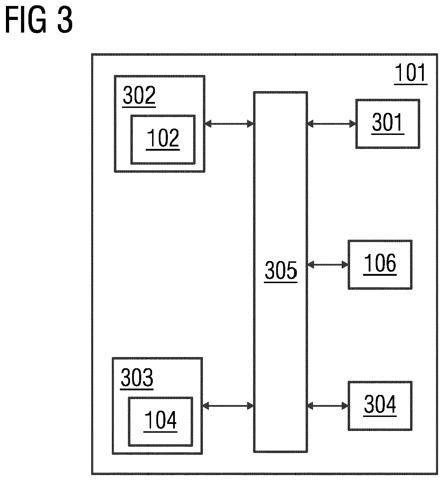

The cloud platform/apparatus 101 is further illustrated in greater detail in FIG 3. Referring to FIG 3, the cloud platform 101 comprises a processing unit 301, a memory 302, a storage unit 303, a network interface 106, an input unit 304, a standard interface or bus 305. The cloud platform 101 may be an exemplary embodiment of an apparatus. The apparatus 101 can be a (personal) computer, a workstation, a virtual machine running on host hardware, a microcontroller, or an integrated circuit. As an alternative, the apparatus 101 can be a real or a virtual group of computers (the technical term for a real group of computers is "cluster", the technical term for a virtual group of computers is "cloud").

The processing unit 301, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 301 may also include embedded controllers, such as generic or programmable logic devices or arrays, application specific integrated circuits, single-chip computers, and the like. In general, a processing unit 301 can comprise hardware elements and software elements. The processing unit 301 can be configured for multi-threading, i.e. the processing unit 301 can host different calculation processes at the same time, executing the either in parallel or switching between active and passive calculation processes.

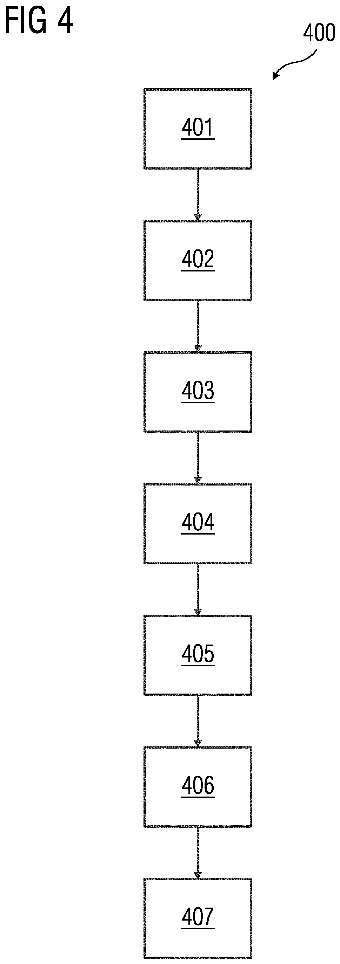

The memory 302 may be volatile memory and non-volatile memory. The memory 302 may be coupled for communication with the processing unit 301. The processing unit 301 may execute instructions and/or code stored in the memory 302. A variety of computer-readable storage media may be stored in and accessed from the memory 302. The memory 302 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 302 includes a logistics management module 102 stored in the form of machine-readable instructions on any of the above-mentioned storage media and may be in communication to and executed by processing unit 301. When executed by the processing unit 301, the logistics management module 102 causes the processing unit 301 to manage logistics in the geographical area. The logistics management module 102 may further cause the processing unit 301 to generate a schedule for the one or more guided vehicles 114A-N. Method steps executed by the processing unit 301 to achieve the abovementioned functionality are elaborated upon in detail in FIG 4, 5, 6, 7, 8 and 9.

The storage unit 303 may be a non-transitory storage medium which stores a schedule database 104. The technical database 104 may store one or more schedule associated with the one or more guided vehicles 114A-N in the geographical area. The bus 305 acts as interconnect between the processing unit 301, the memory 302, the storage unit 303, and the network interface 106.

Those of ordinary skill in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

Disclosed embodiments provide systems and methods for logistics management in a geographical area using guided vehicles. In particular, the systems and methods may generate schedules for the one or more guided vehicles in the geographical area.

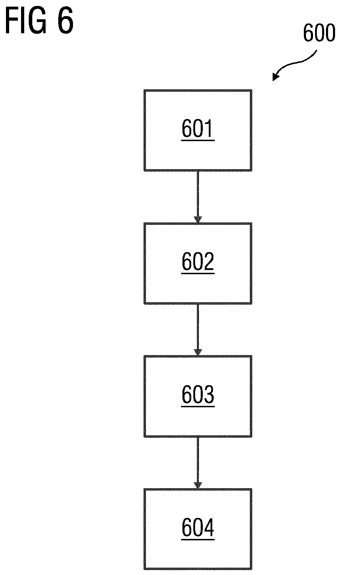

FIG 4 illustrates a flowchart of a method 400 of logistics management in a geographical area using one or more guided vehicles 114A-N. At step 401 of the method 400, one or more parameters associated with at least one of the one or more stations 110A-N is obtained. Such at least one station 110A-N is configured to manage one or more materials. The at least one station 110A-N may form a part of a processing unit, for example, a food and beverage manufacturing facility. Therefore, the at least one station 110A-N may be configured to perform at least one function associated with the food and beverage manufacturing. The one or more parameters associated with the at least one station 110A-N include, but are not limited to, presence/absence of one or more materials required for the functioning of the at least one station 110AN, information associated with technical functioning of the at least one station 110A-N, the one or more guided vehicles present in a vicinity of the at least one station 110A-N, etc. In an embodiment, the at least one station 110A-N is communicatively coupled to one or more of the other stations 110A-N. At step 402, a real-time performance of the at least one station 110A-N is computed based on the one or more parameters associated with the at least one station 110A-N. The real-time performance of the at least one station 110A-N may be dependent on the real-time processing time of the at least one station 110A-N. The method steps detailing the process of computing the real-time performance of the at least one station 110A-N are elaborated in FIG 6. Advantageously, the real-time performance of the at least one station 110A-N enables determination of the real-time status of the at least one station 110A-N. Therefore, any delay or acceleration of steps involved in downstream processing of the one or more materials may be identified effectively. At step 403, a schedule is generated for the one or more guided vehicles 114A-N based on the real-time performance of the at least one station 110A-N. Such one or more guided vehicles 114A-N may be configured to manage logistics of the one or more materials at the at least one station 110A-N using the generated schedule. Advantageously, the one or more guided vehicles 114A-N may be effectively managed based on the real-time performance of the at least one station 110A-N. This enables effective usage of resources and time. In an embodiment, the schedule may be generated for the one or more guided vehicles 114A-N present within a pre-defined perimeter surrounding the at least one station 110A-N. Therefore, at step 404, the one or more guided vehicles 114A-N may be identified based on real-time position information of the one or more guided vehicles 114A-N. The real-time position information associated with the one or more guided vehicles 114A-N may be determined using real-time locating sensing (RTLS) technology. The RTLS technology senses a geolocation of the one or more guided vehicles 114A-N thereby accurately enabling position determination of the one or more guided vehicles 114A-N. At step 405, at least one of the one or more guided vehicles 114A-N is selected based on the real-time performance of the at least one station 110A-N and/or one or more parameters associated with the at least one guided vehicle 114A-N. The one or more parameters associated with the at least one guided vehicle 114A-N include, but are not limited to, geolocation of the vehicles 114A-N, functional status of the vehicles 114A-N, capacity of the vehicles 114A-N, type of vehicles 114A-N, availability of the vehicles 114A-N, etc. Advantageously, most suitable guided vehicle 114A-N maybe selected for management of one or more materials from the at least one station 110A-N. The method further includes a step 406 of sending the generated schedule to such selected at least one guided vehicle 114A-N. At step 407, the at least one guided vehicle 114A-N is operated based on the generated schedule such that the performance of the at least one station 110A-N is optimized. Advantageously, the effective operation of the one or more guided vehicles 114A-N with respect to the performance of the at least one station 110A-N improves the performance of the at least one station 110A-N. Therefore, downstream processing of the one or more materials is enhanced.

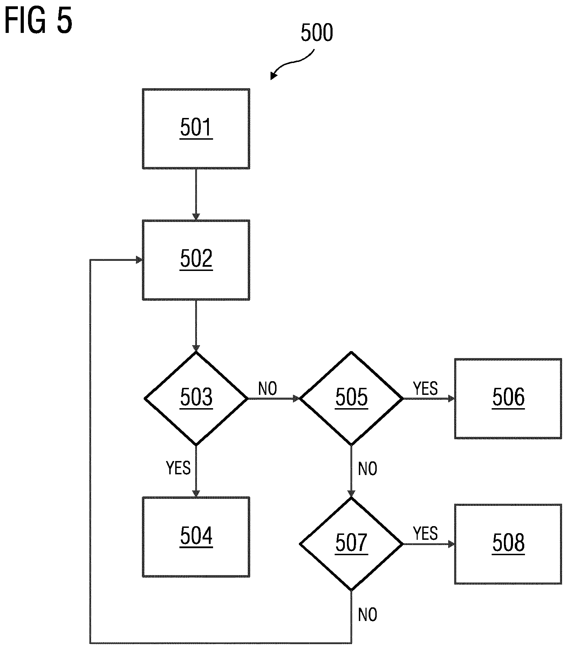

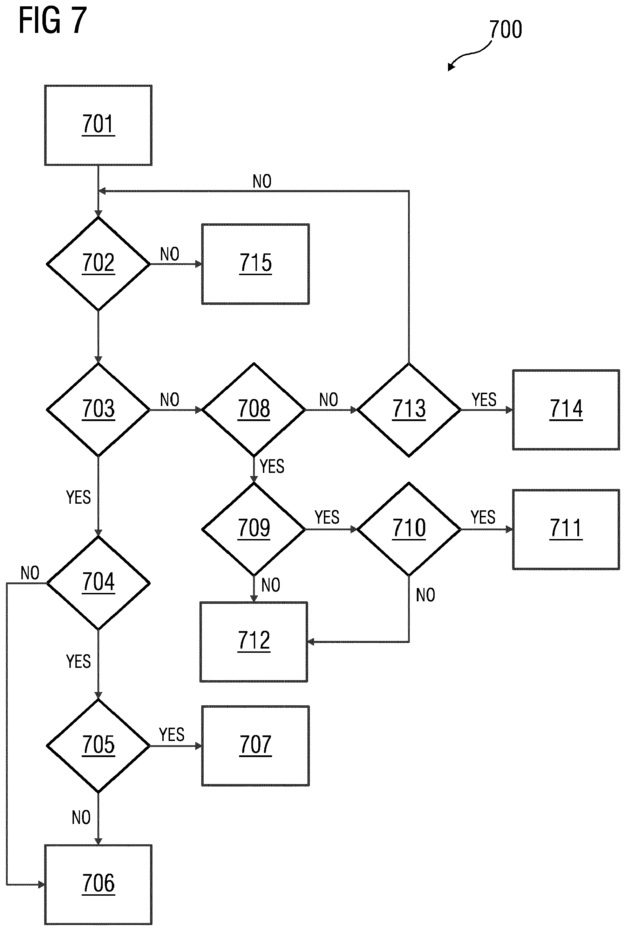

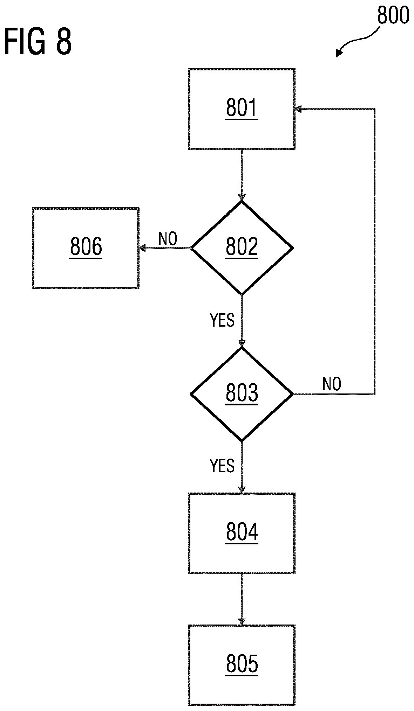

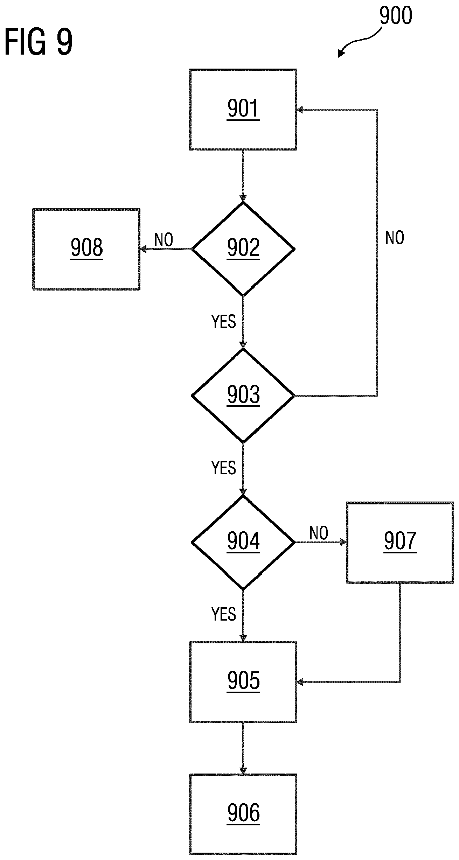

FIG 5 is a flowchart illustrating an embodiment of a method 500 of generating the schedule for the one or more guided vehicles 114A-N. At step 501 of the method 500, the real-time performance of the at least one station 110A-N is computed. At step 502, the real-time performance of the at least one station 110A-N is compared with a pre-defined threshold level. Such pre-defined threshold level may correspond to expected performance levels associated with the at least one station 110A-N. In an embodiment, the pre-defined threshold levels may be obtained from the schedule database 104. At step 503, a determination is made if the real-time performance level of the at least one station 110A-N is below the pre-defined threshold level. If the real-time performance of the at least one station 110A-N is below the pre-defined threshold level, at step 504, the schedule for the one or more guided vehicles 114A-N is modified such that the performance of the at least one station 110A-N is optimized. Method steps detailing modification of the schedule for the one or more guided vehicles 114A-N is elaborated in FIG 7. If the real-time performance of the at least one station 110A-N is not below the pre-defined threshold level, a determination is made at step 505 if the real-time performance of the at least one station 110A-N is above the pre-defined threshold level. If the real-time performance of the at least one station 110A-N is above the pre-defined threshold level, at step 506 the schedule associated with the one or more guided vehicles is modified to optimize the real-time performance of the at least one station 110A-N. Method steps detailing modification of the schedule for the one or more guided vehicles 114A-N if the real-time performance is above pre-defined threshold level is elaborated in FIG 8 and 9. If the real-time performance of the at least one station 110A-N is not above the pre-defined threshold level, at step 507 a determination is made if the real-time performance of the at least one station 110A-N is equal to the pre-defined threshold level. If the real-time performance of the at least one station 110A-N is equal to the pre-defined threshold level, at step 508, the obtained schedule for the one or more guided vehicles 114A-N is maintained. Advantageously, the generation of modified schedule for the one or more guided vehicles 114A-N enables effective management of the logistics for the one or more materials at the at least one station 110A-N.

FIG 6 illustrates a flowchart of a method 600 of computing the real-time performance of the at least one station 110A-N, according to an embodiment. The method 600 includes a step 601 of determining a real-time processing time associated with the at least one station 110A-N. The real-time processing time may be the cumulative time taken by the at least one station 110A-N for processing the one or more materials at the at least one station 110A-N. In an embodiment, the real-time processing time may be determined using the time sensor 116A-N at the at least one station 110A-N which may be configured to capture time taken for each step of processing the one or more materials at the at least one station 110A-N. Additionally, the entry and exit time associated with the one or more guided vehicles 114A-N designated to the at least one station 110A-N also enables determination of the real-time processing time of the at least one station 110A-N. The geofence around the at least one station 110A-N enables determination of the entry and exit times of the one or more guided vehicles 114A-N designated to the at least one station 110A-N. At step 602, an optimal processing time associated with the at least one station 110A-N is determined. The optimal processing time may be the minimum amount of time required to process the one or more materials at the at least one station 110A-N at optimal conditions. The optimal conditions may be related to the functioning of the at least one station 110A-N. At step 603, a difference between the real-time processing time and the optimal processing time of the a t least one station 110A-N is computed. AT step 604, the real-time performance of the at least one station 110A-N is determined from the computed difference between the real-time processing time and the optimal processing time of the at least one station 110A-N. Advantageously, computation of the real-time performance of the at least one station 110A-N enables effective management of logistics of the one or more materials required for the functioning of the at least one station 110A-N.

FIG 7 illustrates a flowchart of a method 700 of modifying the schedule for the one or more guided vehicles 114A-N if the real-time performance of the at least one station 110A-N is below the pre-defined threshold, according to an embodiment. At step 701, the real-time performance of the at least one station 110A-N is determined. At step 702, a determination is made if the real-time performance is lower than the pre-defined threshold level. If the real-time performance is lower than the pre-defined threshold level, a determination is made at step 703 if the one or more materials for the functioning of the at least one station 110A-N is less. The lack of one or more materials at the at least one station 110A-N may affect the functioning of the at least one station 110A-N. Therefore, in order to maintain or optimize the real-time performance of the at least one station 110A-N, the supply of one or more materials must be effectively managed. If the one or more materials may be less in supply, a determination is made at step 704 if at least one of the one or more guided vehicles 114A-N is assigned to the at least one station 110A-N. Such at least one guided vehicle 114A-N may be assigned to supply the one or more materials to the at least one station 110A-N. If at least one guided vehicle 114A-N is assigned, a determination may be made if the guided vehicle 114A-N has departed from an original/onloading location with the one or more materials. Such /onloading location may be, for example, a warehouse for the one or more materials required by the at least one station 110A-N. If the assigned guided vehicle 114A-N has not departed the original/onloading location, the schedule associated with the guided vehicle 114A-N is modified at step 706 and operated such that the one or more materials reach the at least one station 110A-N faster than earlier scheduled. If the guided vehicle 114A-N has already departed the original/onloading location, the schedule of the guided vehicle 114A-N is modified at step 707 such that the guided vehicle 114A-N reaches the at least one station 110A-N faster than earlier scheduled.

In a further embodiment, if the one or more materials for the functioning of the at least one station 110A-N is not less, a determination is made at step 708 if a technical problem exists at the at least one station 110A-N. If a technical problem is identified, a determination is made at step 709 if at least one guided vehicle 114A-N has been assigned to the at least one station 110A-N. If at least one guided vehicle 114A-N has been assigned, a determination is made at step 710 if at least one second station 110A-N is available which can accept the one or more materials from the assigned guided vehicle 114A-N. If such at least one second station 110A-N is available, the schedule of the assigned guided vehicle 114A-N is modified at step 711 such that the one or more materials are transported to the at least one second station 110A-N. If the second station 110A-N is not available, the schedule of the assigned guided vehicle 114A-N is modified such that the one or more materials reach the at least one station 110A-N later than initially planned. Similarly, if a guided vehicle 114A-N has not been assigned to the at least one station 110A-N, the schedule is modified such that the assignment is delayed and the guided vehicle 114A-N reaches the at least one station 110A-N later than earlier planned.

In yet another embodiment, if a technical problem is not identified, a determination is made at step 713 if one or more materials have been accumulated at the at least one station 110A-N after processing of such one or more materials has been completed. If so, at step 714 the schedule of one or more guided vehicles 114A-N is modified such that the guided vehicles 114A-N reach the at least one station 110A-N and transport the accumulated one or more materials to a target location. In an embodiment, the one or more guided vehicles 114A-N whose schedule has to be modified may be selected based on the proximity of such one or more guided vehicles 114A-N to the at least one station 110A-N. If the real-time performance of the at least one station 110A-N is not below the pre-defined threshold level, further method steps are performed at step 715. Such further steps are elaborated in greater detail in FIG 8 and 9.

FIG 8 illustrates a flowchart of a method 800 of modifying the schedule for the one or more guided vehicles 114A-N if the real-time performance of the at least one station 110A-N is above the pre-defined threshold level, according to an embodiment. At step 801, the real-time performance of the at least one station 110A-N is computed. At step 802, a determination is made if the real-time performance of the at least one station 110A-N is above the pre-defined threshold level. If so, a determination is made at step 803 if one or more material has accumulated at the at least one station 110A-N after the processing of such one or more materials has been completed by the at least one station 110A-N. If the one or more materials are accumulated, at step 804, the schedule corresponding to one or more guided vehicles 114A-N are modified such that the one or more guided vehicles 114A-N are assigned to the transport of the accumulated one or more materials to a target location. In an embodiment such determination of accumulation of the one or more materials may also be predicted based on the real-time performance of the at least one station 110A-N. Therefore, the assignment of the one or more guided vehicles 114A-N may be planned accordingly. In a further step 805, the at least one station 110A-N may be labelled as a potential station that may receive one or more material from the other stations 110A-N which may have a low real-time performance. If the real-time performance of the at least one station 110A-N is not above the pre-defined threshold level, further steps are performed at step 806. Such further steps may include determining if the real-time performance of the at least one station 110A-N is equal to the pre-defined threshold level. If so, the schedule of the one or more guided vehicles 114A-N assigned to the at least one station 110A-N is maintained to maintain the optimal performance of the at least one station 110A-N.

FIG 9 illustrates a flowchart of a method 900 of modifying the schedule for the one or more guided vehicles 114A-N if the real-time performance of the at least one station 110A-N is above the pre-defined threshold level, according to another embodiment. At step 901, the real-time performance of the at least one station 110A-N is determined. At step 902, a determination is made if the real-time performance of the at least one station 110A-N is above the pre-defined threshold level. If so, a determination is made at step 903 if one or more material may be needed by the at least one station 110AN for further processing. If so, a further determination is made at step 904 if at least one guided vehicle 114A-N has been assigned to the at least one station 110A-N for transportation of the one or materials to the at least one station 110A-N. If the at least one guided vehicle 114A-N has been assigned, the schedule for such guided vehicle 114A-N is modified at step 905 such that the transportation of the one or more materials to the at least one station 110A-N is accelerated. If the guided vehicle 114A-N has not been assigned, at step 907, the schedule of at least one guided vehicle 114A-N is modified such that the at least one guided vehicle 114A-N is assigned to the at least one station 110A-N. At step 906, the at least one station 110A-N is labelled as potential station that may receive one or more material from other stations whose real-time performance is low. If the real-time performance of the at least one station 110A-N is not above the pre-defined threshold level, further steps are performed at step 908. Such further steps may include determining if the real-time performance of the at least one station 110A-N is equal to the pre-defined threshold level. If so, the schedule of the one or more guided vehicles 114A-N assigned to the at least one station 110A-N is maintained to maintain the optimal performance of the at least one station 110A-N.

### Exemplary embodiment:

In an embodiment, the one or more stations 110A-N form a part of a food and beverage manufacturing facility 100. The one or more stations 110A-N are configured to manufacture and package biscuits. Therefore, each station of the one or more stations 110A-N is configured to perform a portion of the process of manufacturing and packaging of biscuits. The invention enables optimization of the logistics management such that the production and packaging of biscuits is performed effectively and in a timely manner. Each station 110A-N has a surrounding geofence that enables determination of entry and exit times of one or more guided vehicles 114A-N to and from the one or more stations 110A-N. The one or more guided vehicles 114A-N are configured to transport one or more materials from at least one of the one or more stations 110A-N to another station or to a target location. In one station 110A, the one or materials required for preparation of a dough for the biscuits is processed. Therefore, based on a real-time performance of the station 110A, schedule of one or more guided vehicles 114A-N may be modified such that the one or more materials required for preparation of the dough reaches the station 110A on time. Similarly, once the dough has been processed, the dough may be transferred to a second station 110B for baking of biscuits. Accumulation of the processed dough at the station 110A may affect the performance of the station 110A as well as station 110B. Therefore, the schedule of the one or more guided vehicles are modified such that the processed dough is transported on time to the station 110B. The one or more guided vehicles 114A-N selected for transportation of the dough from the first station 110A to the second station 110B may be selected from the one or more guided vehicles present in the vicinity of the first station 110A. The real-time location sensing technology is used to determine the real-time location of the one or more guided vehicles 114A-N. Such vehicles may be present within a pre-defined perimeter surrounding the first station 110A. The schedule of the one or more guided vehicles 114A-N may be managed such that the one or more materials required by the first station 110A for the preparation of the dough are available in due time. This may also be managed based on the real-time performance of the first station 110A. Therefore, the transportation of the one or more materials to the first station 110A may be accelerated or moderated based on higher or lower performance of the first station 110A in comparison to a pre-defined threshold level. If the real-time performance of the first station 110A is lower than the pre-defined threshold level, another station 110C from the one or more stations 110A-N may be identified that can process the one or more materials for preparation of the dough. Therefore, advantageously, the throughput of the manufacturing unit 100 can be effectively managed. One or more stations 110A-N maybe labelled as potential stations based on the real-time performance of such stations. Such potential stations may be capable of receiving one or more materials for processing from other stations which may have a low real-time performance. Therefore, the logistics of the facility 100 is managed effectively from manufacturing to packaging. The invention may also be extended to transportation of the packaged biscuits to a target end point location.

The advantage of the invention is that use of real-time status information of production/processing steps enables dynamic adjustment of transportation of one or more materials between stations 110A-N. This reduces a chance of delay, bottlenecks and wastage of resources when a station is under/over utilized. Therefore, the performance of the stations and the overall facility is optimized significantly.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### List of reference numbers

- 100: Logistics management system
- 101: Apparatus for logistics management
- 102: Logistics management module
- 104: Schedule database
- 106: Network interface
- 107: Medical database
- 108A-N: Interface
- 110A-N: Stations
- 112A-N: RTLS application
- 114A-N: Guided vehicles
- 116A-N: Time sensors
- 118A-N: Geofence module
- 120: User device
- 200: Logistics management system
- 201: Edge device
- 202: Network
- 301: Processing unit
- 302: Memory
- 303: Storage unit
- 304: Input unit
- 305: Bus
- 400: Method of logistics management in a geographical area
- 500: Method of generating a schedule for guided vehicles
- 600: Method of computing real-time performance of stations
- 700: Method of modifying schedule if real-time performance of stations is below a pre-defined threshold
- 800: Method of modifying schedule if real-time performance of stations is above a pre-defined threshold, in a first embodiment
- 900: Method of modifying schedule if real-time performance of stations is below a pre-defined threshold, in a second embodiment

## Claims

1. A method (400) of logistics management in a geographical area using guided vehicles (114A-N), the method comprising:
obtaining one or more parameters associated with at least one station (110A-N) within the geographical area, wherein the at least one station (110A-N) is configured to manage one or more materials;
computing real-time performance of the at least one station (110A-N) based on the one or more parameters associated with the at least one station (110A-N); and
generating a schedule for one or more guided vehicles (114A-N) based on the real-time performance of the at least one station (110A-N), wherein the one or more guided vehicles (114A-N) are configured to manage logistics of the one or more materials at the at least one station (110A-N) using the schedule.

2. The method (400) according to claim 1, further comprising:
identifying the one or more guided vehicles (114AN) based on real-time position information of the one or more guided vehicles (114A-N); and
selecting at least one guided vehicle (114A-N) from the one or more guided vehicles (114A-N) based on the real-time performance of the station (110A-N) and/or one or more parameters associated with the at least one guided vehicle (114A-N).

3. The method (400) according to claim 1 or 2, further comprising sending the generated schedule to the at least one selected guided vehicle (114A-N).

4. The method (400) according to claim 1 or 3, further comprising operating the at least one guided vehicle (114AN) based on the generated schedule such that the performance of the at least one station (110A-N) becomes optimal.

5. The method (400) according to claim 1, wherein generating the schedule comprises:
determining whether the real-time performance of the at least one station (110A-N) is below a pre-defined threshold level;
if the real-time performance of the at least one station (110A-N) is below the pre-defined threshold level, modifying a standard schedule for the one or more guided vehicles (114A-N) such that the real-time performance of the station (110A-N) becomes optimal;
if the real-time performance of the at least one station (110A-N) is not below the pre-defined threshold level, determining whether the real-time performance of the at least one station (110A-N) is above pre-defined threshold level;
if the real-time performance of the at least one station (110A-N) is above the pre-defined threshold level, modifying the standard schedule for the one or more guided vehicles (114A-N) such the real-time performance of the station (110A-N) is optimized;
if the real-time performance of the at least one station (110A-N) is not above the pre-defined threshold level, determining whether the real-time performance of the at least one station (110A-N) is equal to the pre-defined threshold level; and
if the real-time performance of the station (110AN) is equal to the pre-defined threshold level, obtaining the standard schedule from a schedule database (104).

6. The method (400) according to claim 1, wherein computing the real-time performance of the at least one station (110A-N) comprises:
computing a real-time processing time associated with the at least one station (110A-N); and
computing the real-time performance of the at least one station (110A-N) based on the real-time processing time and an optimal processing time associated with the at least one station (110A-N).

7. The method (400) according to claims 1 and 5, wherein modifying the standard schedule if the real-time performance of the at least one station (110A-N) is below the pre-defined threshold level comprises at least one of:
modifying the schedule of the one or more guided vehicles (114A-N) such that delivery of one or more materials to the at least one station (110A-N) is moderated;
identifying at least one second station (110A-N) for delivery of the one or more materials, wherein the at least one second station (110A-N) is capable of handling the one or more materials; and
modifying the schedule of the one or more guided vehicles (114A-N) such that delivery of the one or more materials from the at least one station (110A-N) to the at least one second station (110A-N) is accelerated.

8. The method (400) according to claim 5, wherein modifying the standard schedule if the real-time performance of the at least one station (110A-N) is above the pre-defined threshold level comprises at least one of:
modifying the schedule of the one or more guided vehicles (114A-N) such that delivery of one or more materials to the at least one station (110A-N) is accelerated;
labelling the at least one station (110A-N) as a potential station (110A-N) that can receive the one or more materials from other stations (110A-N); and
modifying the schedule of the one or more guided vehicles (114A-N) such that delivery of the one or more materials from the at least one station (110A-N) to at least one second station (110A-N) is accelerated.

9. The method (400) according to claim 1 and 6, wherein receiving one or more parameters from the at least one station (110A-N) via real-time locating system, wherein the one or more parameters comprises real-time processing time of the at least one station (110A-N).

10. An apparatus (101) for logistics management using guided vehicles (114A-N), the apparatus (101) comprising:
one or more processing units (301); and
a memory (302) communicatively coupled to the one or more processing units (301), the memory (302) comprising a logistics management module (102) configured to perform the method steps as claimed in claims 1 to 9.

11. A system (100) comprising:
an apparatus (101) as claimed in claim 10;
one or more guided vehicles (114A-N) communicatively coupled to the apparatus (101); and
one or more stations (110A-N) disposed within a geographical area, wherein the apparatus (101) comprise computer readable instructions, which when executed by the apparatus (101) causes the apparatus (101) to perform the method according to claims 1 to 9.

12. The system (100) according to claim 10, wherein the one or more stations (110A-N) is configured with geofences.

13. The system (100) according to claim 10, wherein the one or more stations (110A-N) is configured to transmit real-time processing time using real-time locating system.

14. A computer program product comprising machine readable instructions, that when executed by a processing unit (301), cause the processing unit (301) to perform a method according to claims 1-9.

15. A computer readable medium on which program code sections of a computer program are saved, the program code sections being loadable into and/or executable in a system to make the system (100) execute the method of any one of the claims 1 to 9 when the program code sections are executed in the system.
